# EUROPEAN PATENT APPLICATION

(11) **EP 4 636 884 A1**
(43) Date of publication of application: **22.10.2025**
(21) Application number: 25170970.5
(22) Date of filing: 16.04.2025
(51) Int. Cl.: H01M 10/04, H01M 10/0587, H01M 50/107, H01M 50/152, H01M 50/533, H01M 50/538

(54) **SECONDARY BATTERY**

(30) Priority: 16.04.2024 KR 20240050525
(71) Applicant: SAMSUNG SDI CO., LTD., Yongin-si, Gyeonggi-do 17084 (KR)
(72) Inventor: Park, Jung Hyun, 17084 Yongin-si, Gyeonggi-do (KR); Kim, Jung Hyun, 17084 Yongin-si, Gyeonggi-do (KR); Lee, Jung Su, 17084 Yongin-si, Gyeonggi-do (KR); Kim, So Yeon, 17084 Yongin-si, Gyeonggi-do (KR); Kim, Joung Ku, 17084 Yongin-si, Gyeonggi-do (KR); Kim, Kyoung Tae, 17084 Yongin-si, Gyeonggi-do (KR); Park, Yeon Jin, 17084 Yongin-si, Gyeonggi-do (KR); Jung, Hyun Ki, 17084 Yongin-si, Gyeonggi-do (KR)
(74) Representative: Gulde & Partner

(57) **Abstract**

A secondary battery includes a case and an electrode assembly accommodated in a space inside of the case. The electrode assembly includes a first tab connected to a first electrode plate and a second tab connected to a second electrode plate. A cap plate seals the case. The first tab and the second tab are formed in different shapes.

## Description

### BACKGROUND

### 1. Field

Embodiments relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

The information disclosed in this section is provided only for enhancement of understanding of the background of the disclosure and therefore it may contain information that does not form the prior art.

### SUMMARY

The invention is defined by the appended claims. The description that follows is subjected to this limitation. Any disclosure lying outside the scope of said claims is only intended for illustrative as well as comparative purposes.

Embodiments provide a secondary battery capable with increased capacity and improved process characteristics.

The secondary battery according to an embodiment includes a case; an electrode assembly accommodated in a space inside of the case and including a first tab connected to a first electrode plate and a tab connected to a second electrode plate; and a cap plate sealing the case, the first tab and the second tab are formed in different shapes.

The first tab and the second tab may be formed in the same or opposite directions with respect to the electrode assembly.

The electrode assembly may be wound into a cylindrical shape, the first tab and the second tab protrude to a top and a bottom of the electrode assembly, respectively.

The first tab and the second tab may be formed as stripe type base material tabs, a stripe type base material tabs with notches formed therein, overlapping and aligned base material tabs, or lead tabs, and the first tab and the second tab are formed in different shapes.

The first tab or the second tab may be formed as notched base tab that is notched at set depths from an outside with respect to an uncoated portion of the first or second electrode plate that is not coated with the active material.

The first tab or the second tab may be formed as an overlapping and aligned base material tab is formed by notching an uncoated portion of the first or second electrode plate on which an active material layer is not coated and removing a remaining area except fora base material tab.

The first tab or the second tab may be formed as a lead tab that is coupled to an uncoated portion of the first or second electrode plate where an active material layer is not coated.

The first tab may be electrically connected to the case, the second tab may be electrically connected to the cap plate.

The first tab may be coupled to a first current collector plate that is positioned between the electrode assembly and the case, the second tab may be coupled to a second current collector plate that is positioned between the electrode assembly and the cap plate.

The first current collector plate may be electrically connected to a rivet terminal coupled to the case, the second current collector plate may be electrically connected to the cap plate.

The first tab and the second tab may be formed in different regions of a surface of the electrode assembly, the first tab and the second tab may be coupled to the first and second current collector plates, respectively.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view showing a cylindrical secondary battery according to an embodiment.
FIG. 2 is a sectional view showing the cylindrical secondary battery according to the embodiment.
FIG. 3 is a perspective view showing an electrode assembly of the cylindrical secondary battery according to the embodiment.
FIG. 4 is a plan view showing the electrode assembly of the cylindrical secondary battery according to the embodiment before winding.
FIG. 5 is a perspective view showing the electrode assembly of the cylindrical secondary battery according to the embodiment.
FIG. 6 is a plan view showing the electrode assembly of the cylindrical secondary battery according to the embodiment before winding.
FIG. 7 is a perspective view showing the electrode assembly of the cylindrical secondary battery according to the embodiment.
FIG. 8 is a plan view showing the electrode assembly of the cylindrical secondary battery according to the embodiment before winding.
FIG. 9 is a plan view showing each electrode plate of the electrode assembly of the cylindrical secondary battery according to the embodiment before winding.
FIG. 10 is a sectional view showing the cylindrical secondary battery according to the embodiment.
FIGS. 11a and 11b are a plan view and a perspective view showing the electrode assembly of the secondary battery according to the embodiment.
FIG. 12 is a plan view showing the electrode assembly of the secondary battery according to the embodiment in an unfolded state.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

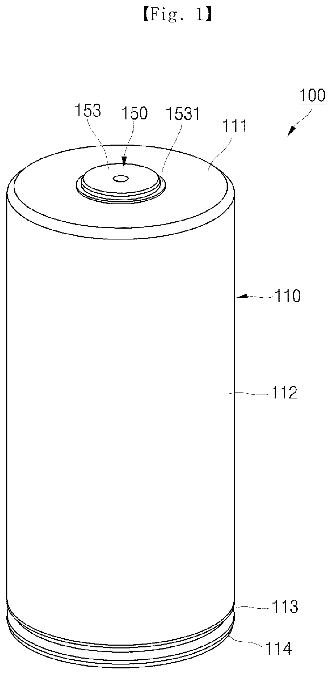

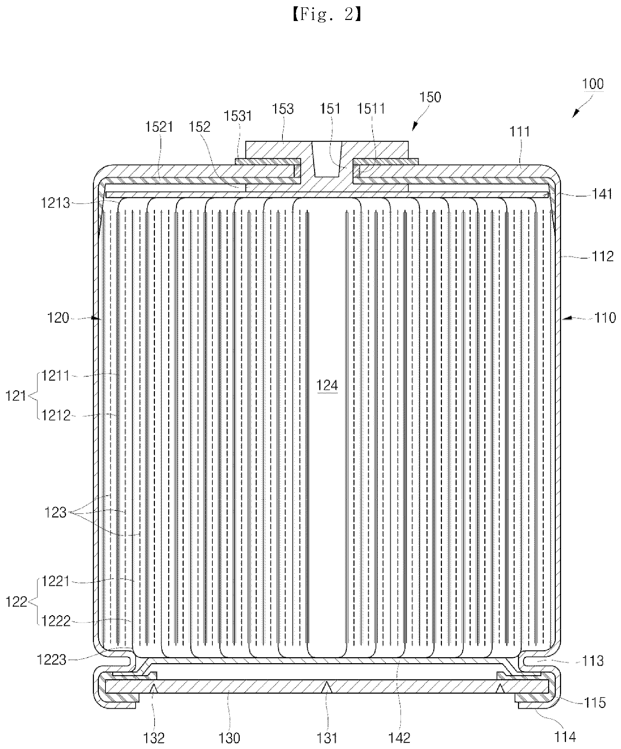

FIG. 1 is a perspective view showing a cylindrical secondary battery according to an embodiment. FIG. 2 is a sectional view showing the cylindrical secondary battery according to the embodiment.

Referring to FIGS. 1 and 2, the secondary battery 100 according to the embodiment includes a case 110, an electrode assembly 120, and a cap plate 130. Also, the secondary battery 100 according to the embodiment may further include a first current collector plate 141, a second current collector plate 142, and a rivet terminal 150.

The case 110 accommodates the electrode assembly 120 and an electrolyte. The case 110 and the cap plate 130 may form an outer shape of the secondary battery 100. The case 110 may include a base part 111 and a side wall part 112. The base part 111 may have a disc shape. The side wall part 112 may extend downward from the base part 111 and may have a cylindrical shape. The case 110 may include a can, an outer shell, or a housing. Alternatively, the case 110 may be formed in various shapes other than a cylindrical shape, such as a pouch shape. Also, the case 110 may include a metal, such as steel, nickel-plated steel, a steel alloy, aluminum, an aluminum alloy, or a deep drawing cooling sheet (SPCE). Alternatively, the case may include a laminate film or plastic forming a pouch. The side wall part 112 may include a beading part 113 and a crimping part 114. The beading part 113 may be a region that is sunken inwardly in a region between the electrode assembly 120 and the cap plate 130. The crimping part 114 may be a region bent inwardly to cover the cap plate 130. The electrode assembly 120 may be stably fixed to the inside of the case 110 by the base part 111 and the beading part 113. In addition, the cap plate 130 may be stably fixed by the crimping part 114.

The electrode assembly 120 may include a first electrode plate 121, a second electrode plate 122, and a separator 123 between the first electrode plate 121 and the second electrode plate 122. The electrode assembly 120 may be wound in a jelly-roll shape centered around a core 124. The core 124 is a central empty space of the electrode assembly 120 and may be formed in the longitudinal direction of the electrode assembly. A center pin (optional) may be disposed in the core 124. The electrode assembly 120 may include an electrode group, an electrode body, or an electrode. The electrode assembly 120 may be connected to an external device to be charged or discharged.

The first electrode plate 121 may include a first base material 1211 and a first active material layer 1212 on the first base material 1211. The first base material 1211 may include a first tab 1213. The first tab 1213 is a portion where the first active material layer 1212 is not disposed. The first tab 1213 may extend outward (for example, upward). The first tab 1213 may be electrically connected to the first current collector plate 141.

The second electrode plate 122 may include a second base material 1221 and a second active material layer 1222 on the second base material 1221. The second base material 1221 may include a second tab 1223. The second tab 1223 is a portion where the second active material layer 1222 is not disposed. The second tab 1223 may extend outwardly (for example, downwardly). The second tab 1223 may be electrically connected to the second current collector plate 142.

Alternatively, at least one of the first current collecting plate 141 and the second current collector plate 142 may be omitted. When the first current collector plate 141 is omitted, the first tab 1213 may be directly connected to the rivet terminal 150. When the second current collector plate 142 is omitted, the second tab 1223 may be directly connected to the case 110.

The first tab 1213 and the second tab 1223 may extend in opposite directions. In addition, the first tab 1213 and the second tab 1223 have different shapes. For example, the first tab 1213 may be formed by notching an uncoated portion where the first active material is not formed. The second tab 1223 may be formed by exposing an uncoated portion where the second active material is not formed. Accordingly, the secondary battery 100 may be designed and formed in different ways. Further, the capacity of the secondary battery may be increased, and the processability may be improved. Specific configurations of the first tab 1213 and the second tab 1223 are described below.

The first electrode plate 121 may be a positive electrode. The first base material 1211 may include, for example, aluminum foil. In addition, the first active material layer 1212 may include a transition metal oxide. The second electrode plate 122 may be a negative electrode. The second base material 1221 may include, for example, copper foil or nickel foil. In addition, the second active material layer 1222 may include graphite and/or silicon.

The separator 123 may prevent short circuit between the first electrode plate 121 and the second electrode plate 122 while allowing movement of lithium ions. The separator 123 may be disposed on both sides of the first electrode plate 121 or on both sides of the second electrode plate 122. In addition, the separator 123 may also be disposed on the outermost surface of the electrode assembly 120. Therefore, the separator 123 may further surround the outer surface of the electrode assembly 120.

The central region of the electrode assembly 120 may be empty. The central region may be a core 124. When the internal pressure of the secondary battery becomes greater than the reference pressure, the core 124 may become a passage through which the pressure is discharged.

Meanwhile, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<a<2); LiaNi1-b-cMnbXcO2-αDα (0.90≤a≤1.8, 0≤b≤0.5, 0≤c≤0.5, 0<a<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

The cap plate 130 may be coupled to the lower portion of the case 110 to seal the case 110. The cap plate 130 may have a circular shape. The edge of the cap plate 130 and the side wall part 112 may be coupled. For example, the edge of the cap plate 130 may be disposed between the beading part 113 and the crimping part 114. An insulating gasket 115 may be disposed in a region between the cap plate 130 and the beading part 113 and a region between the cap plate 130 and the crimping part 114. The cap plate 130 may include a vent plate, a cover plate, or a sealing plate. The cap plate 130 may be formed from iron, nickel-plated iron, stainless steel, aluminum, and/or an aluminum alloy. When the secondary battery 100 is exposed to heat or electrically shorted (e.g., internal short circuit or external short circuit), the internal pressure may become greater than a reference pressure. At this time, the cap plate 130 is opened. As a result, the internal pressure is reduced and the internal heat source may be discharged to outside of the secondary battery 100. To this end, the cap plate 130 may include a break portion 131. The break portion 131 may have a thinner thickness than other regions of the cap plate 130. As a result, when the internal pressure is greater than the reference pressure, the break portion 131 may open.

The first current collector plate 141 may be disposed between the electrode assembly 120 and the base part 111. The first current collector plate 141 may be disc shaped. The first tab 1213 may be electrically connected (e.g., laser welded) to the lower surface of the first current collector plate 141. The upper surface of the first current collector plate 141 may be electrically connected (e.g., laser welded) to the rivet terminal 150. The first current collector plate 141 may include a current collector, a current collector member, or a conductor. The first current collector plate 141 may be formed from aluminum, an aluminum alloy, steel, nickel-plated steel, or a steel alloy. The first current collector plate 141 may be a current flow path between the electrode assembly 120 and the rivet terminal 150.

The current second collector plate 142 may be disposed between the electrode assembly 120 and the cap plate 130. The second current collector plate 142 may be disc shaped. The second tab 1223 may be electrically connected (e.g., laser welded) to the upper surface of the second current collector plate (142). An edge of the second current collector plate 142 may be electrically connected to the side wall part 112. The edge of the second current collector plate 142 may be electrically connected to a lower portion of the beading part 113. The edge of the second current collector plate 142 may be disposed between the lower portion of the beading part 113 and the upper portion of the insulating gasket 115. The second current collector plate 142 may include a current collector, a current collector member, or a conductor. The second current collector plate 142 may be formed from copper, a copper alloy, steel, nickel-plated steel, a steel alloy, aluminum, and/or an aluminum alloy. The second current collector plate 142 may be a current flow path between the electrode assembly 120 and the case 110.

The rivet terminal 150 may include a rivet body part 151, a rivet inner plate 152, and a rivet outer plate 153. The rivet body part 151 may be coupled by penetrating the base part 111. The sealing gasket 1511 may surround an edge of the rivet body part 151. The rivet inner plate 152 may be electrically connected (e.g., laser welding) to the first current collector plate 141. An inner insulating member 1521 may be disposed between the rivet inner plate 152 and the base part 111. The rivet outer plate 153 may be disposed on the base part 111. An outer insulating member 1531 may be disposed between the rivet outer plate 153 and the base part 111. The rivet terminal 150 may include an external terminal or a battery terminal. The rivet terminal 150 may be formed from aluminum, an aluminum alloy, copper, a copper alloy, nickel, and/or a nickel alloy. The rivet terminal 150 may be an external terminal (e.g., a positive terminal). The base part 111 may be an external terminal (e.g., a negative terminal).

Hereinafter, the electrode assembly of the secondary battery according to the embodiment is described in detail.

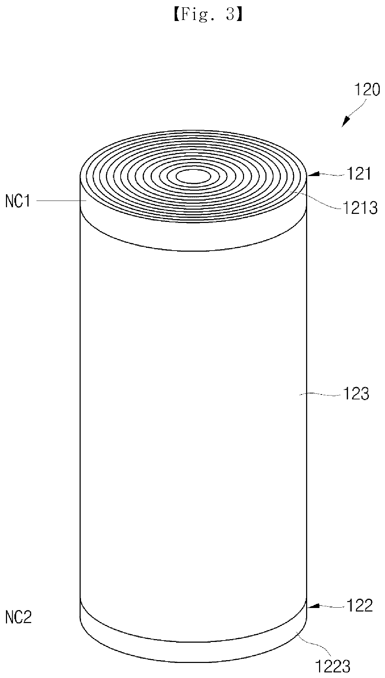

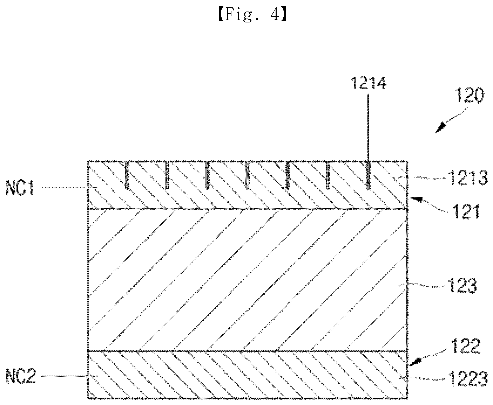

FIG. 3 is a perspective view showing an electrode assembly of the cylindrical secondary battery according to the embodiment. FIG. 4 is a plan view showing the electrode assembly of the cylindrical secondary battery according to the embodiment before winding.

Referring to FIGS. 3 and 4, the electrode assembly 120 may be wound after laminating the first electrode plate 121, the second electrode plate 122, and the separator (123).

The first electrode plate 121 include a first tab 1213 in the form of a base material tab. The base material tab may be a stripe type in which a first uncoated portion NC1 protrudes upward. The first active material layer is not disposed on the first uncoated portion NC1. That is, the first tab 1213 is formed by the first uncoated portion NC1. The first tab 1213 may be connected to the first current collector plate 141. The first tab 1213 may include a notch 1214 formed at a set position. The notch 1214 may be perpendicular to a longitudinal direction of the first uncoated portion NC1. Alternatively, the notch 1214 may be formed diagonally with respect to the longitudinal direction. In addition, the width of the notch 1214 may be constant or varied while extending from the winding start to the end. In addition, the height of each of the first tabs 1213 separated by the notch 1214 may be the same or different. That is, the shape of the base material tab may vary. When the bending process of the first tab 1213 is performed, the first tabs 1213 may be independently deformed by the notch 1214. Therefore, the bending process may be facilitated.

The second electrode plate 122 may include the second tab 1223 in the form of a base material tab. The base material tab may be a stripe type in which the second uncoated portion NC2 protrudes downward. The second active material layer is not disposed on the second uncoated portion NC2. That is, the second tab 1223 is formed by a second uncoated portion NC2. The second tab 1223 may be connected to the second current collector plate 142. The second tab 1223 may not be notched. The second tab 1223 may be a positive electrode and may include aluminum. Therefore, the bending process may be easy due to the characteristics of the material, and the second tab 1223 may not be separately notched. Thus, the first tab 1213 and the second tab 1223 are formed in different shapes. Therefore, the process of forming the tabs 1213 and 1223 may be performed differently in consideration of the characteristics of the material(s). Thus, the processability of the electrode assembly 120 may be improved.

Hereinafter, the electrode assembly of the secondary battery according to another embodiment is described in detail.

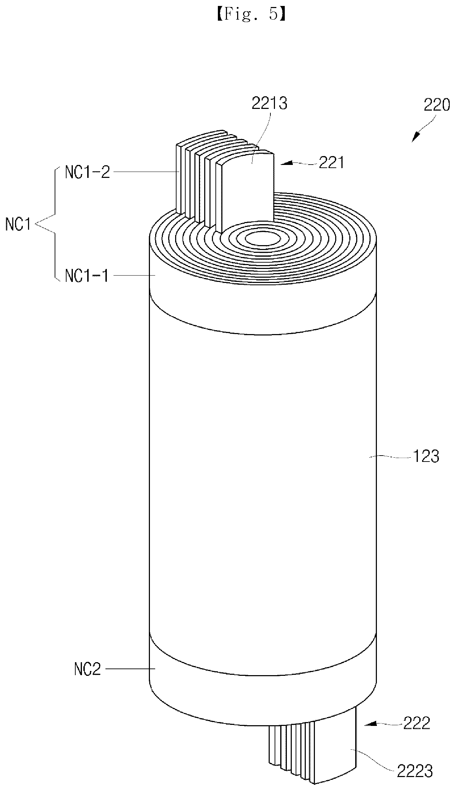

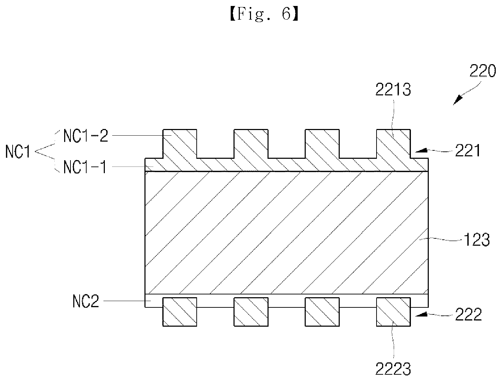

FIG. 5 is a perspective view showing an electrode assembly of the cylindrical secondary battery according to the embodiment. FIG. 6 is a plan view showing the electrode assembly of the cylindrical secondary battery according to the embodiment before winding.

Referring to FIGS. 5 and 6, the first electrode plate 221 may form a first tab 2213 by the base material tab protruding upward from the first uncoated portion NC1. The first uncoated portion NC1 may include a 1-1 uncoated portion NC1-1 and a 1-2 uncoated portion NC1-2. The 1-1 uncoated portion NC1-1 and the 1-2 uncoated portion NC1-2 are formed integrally. The 1-2 uncoated portion NC1-2 is notched. Accordingly, the first tab 2213 is formed by the 1-2 uncoated portion NC1-2. In addition, a plurality of spaced apparat first tabs 2213 are formed. The first tabs 2213 may function as lead tabs. The first tabs 2213 may be connected to the cap plate 130. Although not shown in the drawings, an insulating film may be disposed under the first tabs 2213. Accordingly, a short circuit between the first tabs and the second electrode plate may be prevented. In addition, the first tabs 2213 may be aligned to overlap in the diameter direction of the electrode assembly. Accordingly, welding of the first tabs 2213 and the cap plate (130) may be facilitated. In addition, in order to overlap the first tabs 2213, the distance between each of the first tabs 2213 may gradually increase from the winding start to the end, and the widths of the first tabs 2213 may gradually increase from the winding start to the end. Accordingly, even if a part of the first tabs 2213 is misaligned (e.g., due to design positions within a tolerance), the first tabs 2213 may be overlapped.

The second electrode plate 222 may be coupled with the second tab 2223. The second tab 2223 may have a lead shape. The second tab 2223 may be coupled at a set position of the second uncoated part NC2. The second tab 2223 may be welded to the second uncoated portion NC2, and the second tab 2223 may be connected to the case 110. Since a separate second tab 2223 is coupled with the second uncoated portion NC2, the second uncoated portion NC2 is not notched. Therefore, the process of manufacturing the electrode assembly of the secondary battery may be facilitated.

Hereinafter, the electrode assembly of the secondary battery according to another embodiment is described in detail.

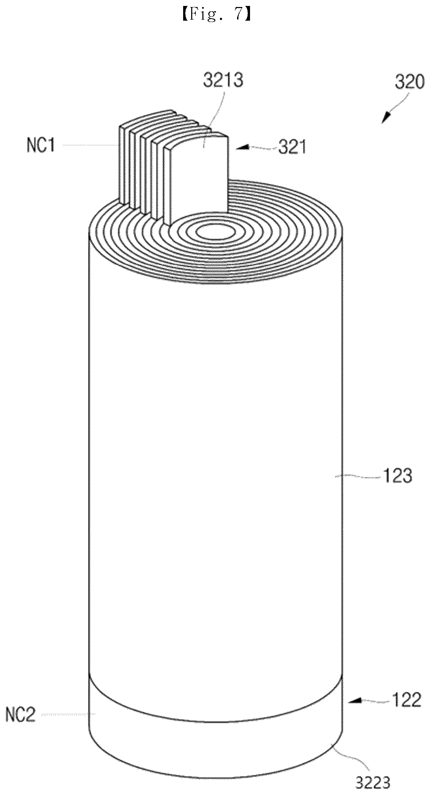

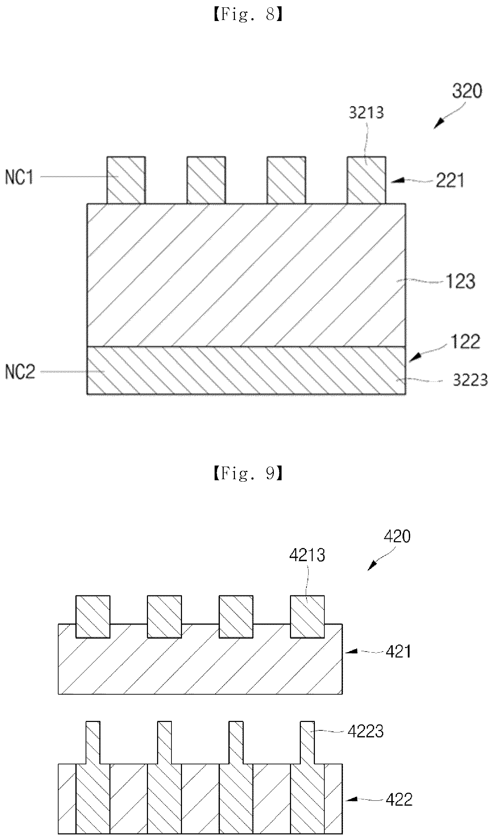

FIG. 7 is a perspective view showing an electrode assembly of the cylindrical secondary battery according to the embodiment. FIG. 8 is a plan view showing the electrode assembly of the cylindrical secondary battery according to the embodiment before winding.

Referring to FIGS. 7 and 8, the first electrode plate 121 may include a first tab 3213 as a base material tab. The base material tab may be formed by the first uncoated portion NC1 protruding upward. The first active material layer is not disposed on the first uncoated portion NC1. The first uncoated portion NC1 is notched so as to be divided into a plurality of first uncoated portions. The plurality of first uncoated portions are spaced apart from each other. Accordingly, a plurality of first tabs 3213 are formed by a plurality of first uncoated portions separated by notches. Although not shown in the drawings, an insulating film may be disposed under the first tab 3213. Accordingly, a short circuit between the first tabs and the second electrode plate may be prevented. The interval between the plurality of first tabs 3213 may increase from the winding start to the end. Accordingly, the first tabs may overlap in the diameter direction of the electrode assembly. The first tabs 3213 function as lead tab, with the first tabs 3213 connected to the cap plate 130.

The second electrode plate 122 may include the second tab 3223 in the form of a base material tab. The base material tab may be a stripe type in which the second uncoated portion NC2 protrudes downward. The second active material layer is not disposed on the second uncoated portion NC2. The second tab 3223 may be connected to the second current collector plate 142. The first tab 3213 and the second tab 3223 are formed in different shapes. And the first tab 3213 and the second tab 3223 may thereby be formed according to desired characteristics. Thus, the process characteristics of the electrode assembly 120 may be improved, and the capacity of the secondary battery may be improved.

As described above, the first tab and the second tab have different shapes. For example, the first tab and the second tab may be formed as a stripe type base material tab, a stripe type base material tab with notches formed therein, an overlapping and aligned base material tab, and/or a lead tab.

Hereinafter, the electrode assembly of the secondary battery according to another embodiment is described in detail.

FIG. 9 is a plan view showing each electrode plate of the electrode assembly of the cylindrical secondary battery according to the embodiment before winding.

Referring to FIG. 9, the electrode assembly 420 may include a first electrode plate 421 and a second electrode plate 422. The first electrode plate may include a first uncoated portion. A separate first tab 4213 may be coupled to the first uncoated portion. The first uncoated portion and the first tab 4213 may be coupled, for example, by welding. The first tab 4213 may be coupled to the cap plate 130.

The second electrode plate 422 includes a second active material layer. The second active material layer is formed in a pattern. The second tab 4223 may be coupled to a second uncoated portion on which the second active material layer is not coated. The second uncoated portion and the second tab 4223 may be coupled , for example, by welding. The second tab 4223 may be coupled with the case 110.

The cylindrical secondary battery according to the embodiment have the first tab 4213 and the second tab 4223 formed in different shapes. Accordingly, various secondary batteries may be designed considering the configuration or capacity of the battery.

Hereinafter, the electrode assembly of the secondary battery according to another embodiment is described in detail.

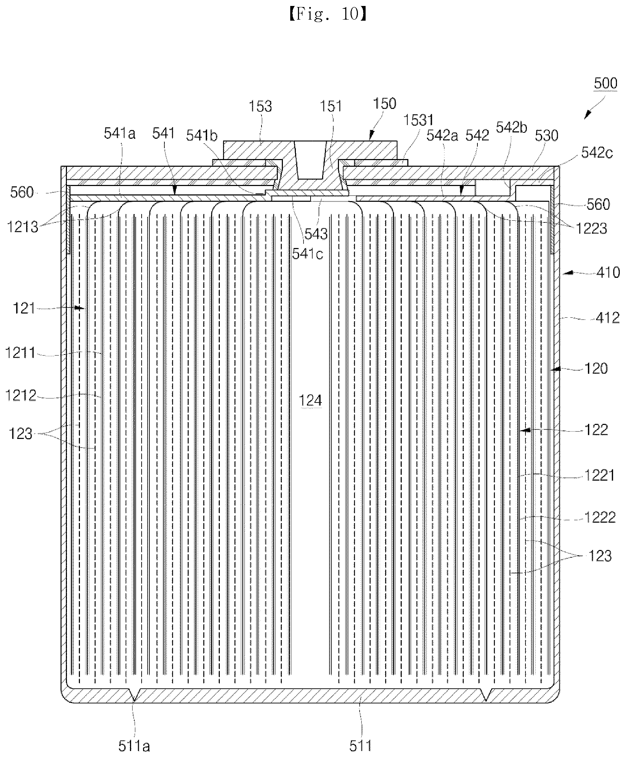

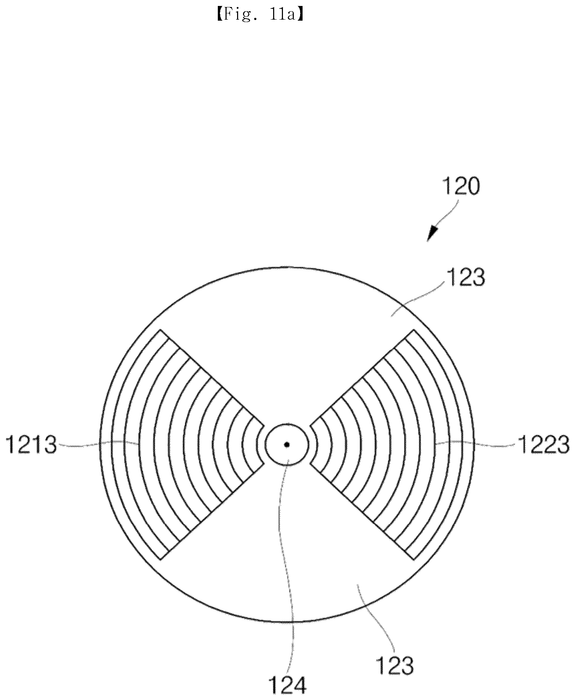

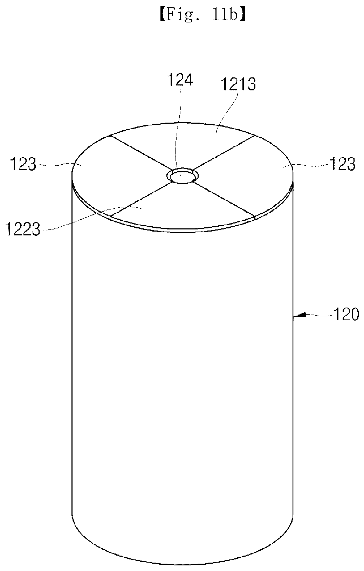

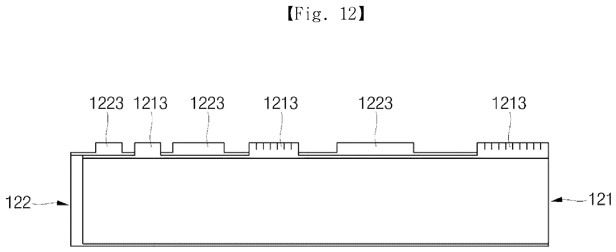

FIG. 10 is a sectional view showing the cylindrical secondary battery according to the embodiment. FIGS. 11a and 11b are a plan view and a perspective view showing the electrode assembly of the secondary battery according to the embodiment. FIG. 12 is a plan view showing the electrode assembly of the secondary battery according to the embodiment in an unfolded state.

Referring to FIGS 10, 11a and 11b, the secondary battery 500 may include a case 510, an electrode assembly 120, a cap plate 530, a first current collector plate 541, and a second current collector plate 542, and a rivet terminal 150.

Current collector plates 541 and 542 may include the first current collector plate 541 and the second current collector plate 542. The current collector plates 541 and 542 may further include an insulating plate 543.

The first current collector plate 541 may electrically connect the first electrode plate 121 and the rivet terminal 150. The first current collector plate 541 may include a current collector, a conductor, or a conductive lead. The first current collector plate 541 may be formed from aluminum or an aluminum alloy. The first current collector plate 541 may be manufactured by a punching process. Alternatively, the first current collector plate 541 may be manufactured by a molten metal casting process. The first current collector plate 541 may include a first connection region 541a, a connection region 541b, and a second connection region 541c. The first connection region 541a may be electrically connected to the plurality of first tabs 1213 by welding. The connection region 541b may be bent and extended upward from the first connection region 541a. The second connection region 541c may be bent and extended from the connection region 541b. The second connection region 541c may be electrically connected to the rivet terminal 150 by welding. Accordingly, the first current collector plate 541 may serve as a current flow path between the electrode assembly 120 and the rivet terminal 150.

The second current collector plate 542 may electrically connect the second electrode plate 122 and the case 510 (e.g., cap plate 530). The second current collector plate 542 may include a current collector, a conductor, or a conductive lead. The second current collector plate 542 may formed from copper, copper alloy, nickel, and/or nickel alloy. The second current collector plate 542 may be manufactured by a punching process. Alternatively, the second current collector plate 542 may be manufactured by a molten metal casting process. The second current collector plate 542 may include a first connection region 542a, a connection region 542b, and a second connection region 542c. The first connection region 542a may be electrically connected to the plurality of second tabs 1223 by welding. The connection region 542b may be bent and extended upward from the first connection region 542a. The second connection region 542c may be bent and extended from the connection region 542b. The second connection region 542c may be electrically connected to the case (i.e., cap plate 530) by welding. Accordingly, the second current collector plate 542 may serve as a current flow path between the electrode assembly 120 and the case 510.

The insulating plate 543 may be disposed between the first current collector plate 541 and the second current collector plate 542. The insulating plate 543 may be disposed on the same plane as the first and second current collector plates 541 and 542. A portion of the insulating plate 543 may be disposed between the second connection region 542c and the electrode assembly 120. The insulating plate 543 may include an insulator or an insulating block. The insulating plate 543 may include a material that does not react with the electrolyte. For example, the insulating plate 543 may include polypropylene, polyethylene, double synthetic rubber (EPDM), or nylon. The first current collector plate 541, the second current collector plate 542, and the insulating plate 543 may be manufactured using a double injection method.

The rivet terminal 150 may be coupled to the case 510. For example, the rivet terminal 150 may be coupled through a terminal hole formed in the cap plate 530. The rivet terminal 150 may include a rivet body part 151 and a rivet outer plate 153. The rivet body part 151 may penetrate the cap plate 530. The rivet body part 151 may include a recess formed at a set depth. The rivet terminal 150 and the first current collector 541 may be laser welded. For example, a laser beam may be transmitted to the first current collector 541 through the recess formed in the rivet body part 151. An outer insulating member 1531 may be further disposed between the rivet body part 151 and the cap plate 530.

An insulating member 560 may surround the edges of the electrode assembly 120 and the current collector plates 541 and 542. The insulating member 560 may contact edges of the electrode assembly 120 and the current collector assembly 541 and 542. The insulating member 560 may surround the edges of the first and second current collector plates 541 and 542. The insulating member 560 may contact edges of the first and second current collector plates 541 and 542. The insulating member 560 may be in the form of an insulating ring, insulating tape, insulating film, or insulator. For example, the insulating member 560 may have a circular ring shape. The insulating member 560 may surround the upper edge of the electrode assembly 120. Accordingly, the edge of the first connection region 541a of the first collector plate 541 does not contact the side wall part 112 of the case 510. A partial area of the insulating member 560 may support the second connection region 542c. Accordingly, the second connection region 542c may be easily brought into close contact with the cap plate 530 during a laser welding process. The insulating member 560 may include a material that does not react with the electrolyte. For example, the insulating member 560 may include polypropylene, polyethylene, double synthetic rubber (EPDM), or nylon.

The first tab 1213 (e.g., positive electrode tab) and the second tab 1223 (e.g., negative electrode tab) are drawn out in the same direction (e.g., upward direction). The first tab 1213 and the second tab 1223 are electrically connected to the first terminal (e.g., the rivet terminal 150) and the second terminal (e.g., the case 510), respectively. Accordingly, the secondary battery 100 may be formed with little electrical resistance and a short current path. Additionally, the first current collector plate 541 (e.g., positive electrode current collector plate) and the second current collector plate 542 (e.g., negative electrode current collector plate) are disposed in the same region. Thus, the space occupied by the current collector plate inside the case 510 is reduced, and the capacity of the secondary battery may be increased.

Referring to FIG. 12, the electrode assembly 120 may include a plurality of first tabs 1213 and a plurality of second tabs 1223 that protrude and extend upward. The plurality of first tabs 1213 and the plurality of second tabs 1223 may be formed in shapes that are symmetrical to each other about the core 124. The plurality of first tabs 1213 and the plurality of second tabs 1223 may have a fan-shaped planar shape.

The tabs 1213 and 1223 may be formed by punching a base material. The widths of the tabs 1213 and 1223 may become wider while extending from the winding start to the end. The first tab 1213 may be notched. And the shapes of the first tab 1213 and the second tab 1223 are different.

That is, in the cylindrical secondary battery according to the embodiment, the first tab and the second tab are formed in different shapes. Therefore, various secondary batteries may be designed with consideration of the configuration or capacity of the battery.

The above is only one embodiment for implementing a secondary battery according to the disclosure, the disclosure is not limited to the above embodiment, and there is a technical spirit of the disclosure to the extent that various modifications can be made by anyone having ordinary skill in the art to which the disclosure pertains.

## Claims

1. A secondary battery (100, 500) comprising:
a case (110, 510);
an electrode assembly (120, 420) accommodated in a space inside of the case (110, 510) and including a first tab (1213, 2213, 3213, 4213) connected to a first electrode plate (121, 221, 421) and a second tab (1223, 2223, 3223, 4223) connected to a second electrode plate (122, 222, 422); and
a cap plate (130, 530) sealing the case (110, 510),
wherein the first tab (1213, 2213, 3213, 4213) and the second tab (1223, 2223, 3223, 4223) are formed in different shapes.

2. The secondary battery (100, 500) as claimed in claim **1,** wherein the first tab (1213, 2213, 3213, 4213) and the second tab (1223, 2223, 3223, 4223) are formed in the same or opposite directions with respect to the electrode assembly (120, 420).

3. The secondary battery (100, 500) as claimed in claim 1 or **2,** wherein the electrode assembly (120, 420) is wound into a cylindrical shape, and
wherein the first tab (1213, 2213, 3213, 4213) and the second tab (1223, 2223, 3223, 4223) protrude to a top and a bottom of the electrode assembly (120, 420), respectively.

4. The secondary battery (100, 500) as claimed in any one of the preceding claims, wherein the first tab (1213, 2213, 3213, 4213) and the second tab (1223, 2223, 3223, 4223) are formed as stripe type base material tabs (1213, 1223), a stripe type base material tabs (1213, 1223) with notches formed therein, overlapping and aligned base material tabs (1213, 1223), or lead tabs (1213, 1223).

5. The secondary battery (100, 500) as claimed in claim **4,** wherein the first tab (1213, 2213, 3213, 4213) or the second tab (1223, 2223, 3223, 4223) is formed as notched base tab (1213, 1223) that is notched at set depths from an outside with respect to an uncoated portion of the first or second electrode plate (122, 222, 422) that is not coated with an active material.

6. The secondary battery (100, 500) as claimed in claim 4, wherein the first tab (1213, 2213, 3213, 4213) or second tab (1223, 2223, 3223, 4223) is formed as an overlapping and aligned base material tab (1213, 1223) by notching an uncoated portion of the first or second electrode plate (122, 222, 422) on which an active material layer is not coated and removing a remaining area except for a base material tab (1213, 1223).

7. The secondary battery (100, 500) as claimed in claim **4,** wherein the first tab (1213, 2213, 3213, 4213) or the second tab (1223, 2223, 3223, 4223) is formed as a lead tab (1213, 1223) that is coupled to an uncoated portion of the first or second electrode plate (122, 222, 422) where an active material layer is not coated.

8. The secondary battery (100, 500) as claimed in any one of the preceding claims, wherein the first tab (1213, 2213, 3213, 4213) is electrically connected to the case (100, 510),
wherein the second tab (1223, 2223, 3223, 4223) is electrically connected to the cap plate (130, 530).

9. The secondary battery (100, 500) as claimed in any one of the preceding claims, wherein the first tab (1213, 2213, 3213, 4213) is coupled to a first current collector plate (141) that is positioned between the electrode assembly (120, 420) and the case (100, 510),
wherein the second tab (1223, 2223, 3223, 4223) is coupled to a second current collector plate (542) that is positioned between the electrode assembly (120, 420) and the cap plate (130, 530).

10. The secondary battery (100, 500) as claimed in claim **9,** wherein the first current collector plate (141) is electrically connected to a rivet terminal (150) coupled to the case (100, 510),
wherein the second current collector plate (542) is electrically connected to the cap plate (130, 530).

11. The secondary battery (100, 500) as claimed in any one of the preceding claims, wherein the first tab (1213, 2213, 3213, 4213) and the second tab (1223, 2223, 3223, 4223) are formed in different regions of a surface of the electrode assembly (120, 420), and
wherein the first tab (1213, 2213, 3213, 4213) and the second tab (1223, 2223, 3223, 4223) are coupled to the first and second current collector plates (542), respectively.
